(19) **Europäisches Patentamt**
**European Patent Office**
**Office européen des brevets**

(11) **EP 4 679 652 A1**

(12) **EUROPEAN PATENT APPLICATION**

(43) Date of publication:
**14.01.2026 Bulletin 2026/03**

(51) International Patent Classification (IPC):
***H02H 9/02*** (2006.01)

(21) Application number: **25183894.2**

(52) Cooperative Patent Classification (CPC):
**H02H 9/025; H02H 9/041**

(22) Date of filing: **19.06.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.07.2024 GB 202409857**

(71) Applicant: **Rolls-Royce plc**
**London N1 9FX (GB)**

(72) Inventors:
• **Valappil, Muneer**
**Derby DE24 8BJ (GB)**

• **Gajanayake, Chandana J**
**Derby DE24 8BJ (GB)**
• **Trainer, David R**
**Derby DE24 8BJ (GB)**
• **Mohamed Halick, Mohamed Sathik**
**Derby DE24 8BJ (GB)**
• **Kotturu, Janardhana**
**Derby DE24 8BJ (GB)**

(74) Representative: **Rolls-Royce plc**
**P.O. Box 31**
**IP Department (SinA-48)**
**Derby Derbyshire DE24 8BJ (GB)**

(54) **CURRENT LIMTING DEVICES**

(57)      A current limiting device 100 and an electrical power system 10a, 10b comprising a current limiting device 100 are described. The current limiting device 100 comprises: an integer number, N, of JFETs $101_{1-N}$, each JFET of the N JFETs having a source terminal (S), a drain terminal (D) and a gate terminal (G). $N \geq 2$. Each of the N JFETs $101_{1-N}$ has an index n = (1, ..., N). For n = (1, ..., N-1), the source terminal of the $n^{th}$ JFET is connected to the drain terminal of the $(n+1)^{th}$ JFET. The source terminal of the $N^{th}$ JFET $101_N$ is connected to the gate terminal of each of the N JFETs $101_{1-N}$.

FIG. 3

EP 4 679 652 A1

## Description

## TECHNICAL FIELD

The present disclosure relates to current limiting devices and to electrical power systems including current limiting devices.

## BACKGROUND

In many electrical power systems, an electrical power source (e.g., an electrical generator or an energy storage system) supplies electrical power to an electrical network (e.g., a DC electrical network) comprising one or more electrical loads. In the event of a fault in the electrical network (e.g., a short circuit fault or another low-impedance fault in a load), the sudden drop in impedance and voltage seen by the power source may result in the power source supplying a large fault current to the network, and/or discharge of a DC link capacitor of a power converter that interfaces between the power source and the network. Loads and/or other components in the network may not be rated to handle such large currents, so may be damaged. It may therefore be desirable to protect an electrical network and its loads from fault current.

One approach is to completely prevent fault current from the reaching the electrical network, for example by opening a circuit breaker that is located between the electrical power source and the electrical network. A problem with this approach is that some fault discrimination and isolation techniques, which may be applied to the network after a fault so that the network can subsequently resume 'normal' operation, require a continuous supply of current to the network. For example, some mechanical contactors, which may be provided at various locations about the electrical network for fault discrimination and isolation purposes, may be inoperable without a continuous supply of current.

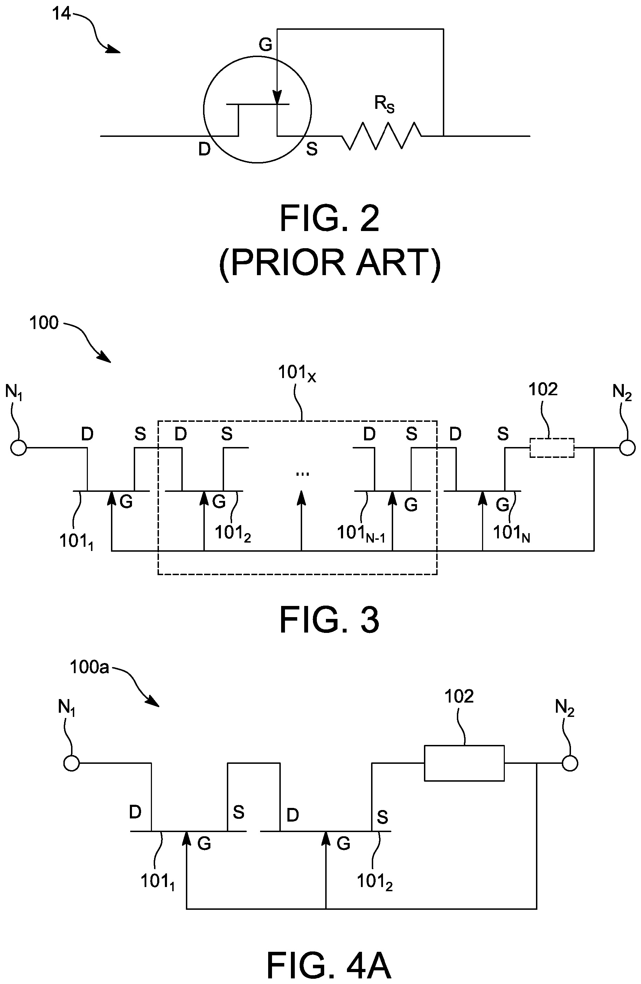

Another approach is to use a current limiting device that allows current to flow to the network but limits its magnitude to an acceptable level. One known type of current limiting device, illustrated in **FIG. 2,** is the current limiting diode 14, also known as a constant-current diode. A current limiting diode 14 typically comprises an n-channel JFET whose source terminal (S) and gate terminal (G) are connected via a biasing source resistor, $R_S$. If the current flowing between the source terminal (S) and drain terminal (D) increases, the magnitude of the voltage across the source resistor also increases, which in turn increases the magnitude of the gate voltage of the JFET. The increase in gate voltage magnitude reduces the size of the conduction channel of the JFET, increasing its electrical resistance. Thus, the current limiting diode 14 responds to an increase in current by increasing its resistance and thus limiting any increase current flowing between the source and drain.

There may be various drawbacks associated with the current limiting diode 14 including, for example, steady-state losses associated with current flow through the source resistor, $R_S$.

## SUMMARY

According to a first aspect, there is a current limiting device comprising:

an integer number, N, of JFETs, each JFET of the N JFETs having a source terminal, a drain terminal and a gate terminal,
wherein:

$$N \geq 2;$$

each of the N JFETs has an index n = (1, ..., N);
for n = (1, ..., N-1), the source terminal of the $n^{th}$ JFET is connected to the drain terminal of the $(n+1)^{th}$ JFET; and
the source terminal of the $N^{th}$ JFET is connected to the gate terminal of each of the N JFETs.

In an embodiment, the current limiting device further comprises a resistor connected between the source terminal of the $N^{th}$ JFET and the gate terminal of each of the N JFETs.

In an embodiment, each JFET has a voltage rating equal to V and the current limiting device has a voltage rating of N*V.

In an embodiment, the JFET for which n = 1 has a higher voltage rating than all JFETs for which n > 1.

In an embodiment, $N = N_H + N_L$, and:

$N_H$ is an integer and $N_H \geq 2$;
$N_L$ is an integer and $N_L \geq 1$; and
A voltage rating of each the $N_H$ JFETs for which $n \leq N_H$ is greater than a voltage rating of each of the $N_L$ JFETs for which $n > N_H$.

In an embodiment, for all n > 1, a voltage rating of the $n^{th}$ JFET is greater than a voltage rating of the $(n-1)^{th}$ JFET.

In an embodiment, the source terminal of the $N^{th}$ JFET is connected to the gate terminal of the $n^{th}$ JFET via an $n^{th}$ circuit branch; and, for n = (1, ..., N-1), an electrical resistance of the $n^{th}$ circuit branch is greater than an electrical resistance of the $(n+1)^{th}$ branch.

In an embodiment, for n = (1, ..., N-1), the source terminal of the $n^{th}$ JFET is connected with the gate terminal of the $n^{th}$ JFET via a resistor or Transient Voltage Suppressor (TVS).

In an embodiment, the source terminal of the $N^{th}$ JFET is connected to the gate terminal of each of the N JFETs via an RC network. The RC network may further connect the source terminal of the $N^{th}$ JFET to the drain terminal of the JFET for which n = 1.

In an embodiment, the gate terminal of the $n^{th}$

JFET is further connected with the gate terminal of the (n+1)th JFET via an avalanche diode.

In an embodiment, N = 2. In another embodiment, N = 3. In still other embodiments, N ≥ 4.

In an embodiment, the current limiting device comprises: a primary current path connected between a first node and a second node, the N JFETs connected in the primary current path; and a secondary current path connected between the first node and the second node in parallel with the primary current path, the secondary current path comprising a semiconductor switch configured to allow current flow through the secondary current path when a voltage in the primary current path passes a threshold.

In an embodiment, the semiconductor switch comprises a Transient Voltage Suppressor, TVS. The TVS may have a breakdown voltage selected so that the TVS conducts, and the secondary current path is activated, when the voltage in the primary current path passes the threshold.

In an embodiment, the TVS comprises a TVS diode or a Metal Oxide Varistor (MOV).

In an embodiment, the semiconductor switch comprises a MOSFET or a JFET. A controller may be configured to control a gate voltage of the MOSFET JFETs to allow current to pass therethrough if the voltage passes the threshold.

In an embodiment, the secondary current path further comprises a resistor connected in series with the semiconductor switch.

In an embodiment, the current limiting device comprises a resistor connected in series with the semiconductor switch and between the source terminal of the Nth JFET and the gate terminal of each of the N JFETs.

In an embodiment, the secondary current path is connected between the drain terminal of the JFET for which n = 1 and the source terminal of one of the N JFETs.

In an embodiment, the secondary current path is connected between the drain terminal of the JFET for which n = 1 and the source terminal of the JFET for which n = 1.

In an embodiment, the secondary current path comprises a first semiconductor switch and a second semiconductor switch connected in series, a node between the first and second semiconductor switch being connected to the source terminal of the JFET for which n = 1.

In an embodiment, N = 3 and the secondary current path further comprises a third semiconductor switch connected in series with the first and second semiconductor switch, a node between the second and third semiconductor switch connected to the source terminal of the JFET for which n = 2.

In an embodiment, the source terminal of the JFET for which n = 1 is connected to the gate terminal of the JFET for which n = 1 via a Transient Voltage Suppressor.

In an embodiment, for all n < N, the source terminal of the nth JFET is connected to the gate terminal of the nth via a Transient Voltage Suppressor

According to a second aspect, there is a current limiting device as shown in any of the circuit diagrams of FIGS. 3, 4A-4D, 5A-5C, 6A-6C, 7A-7C, 8A-8B.

According to a third aspect, there is an electrical power system comprising a current limiting device according to the first aspect or the second aspect.

In an embodiment, the electrical power system further comprises a circuit breaker connected in series with the current limiting device.

In an embodiment, the electrical power system, further comprises: an electrical power source; and an electrical network, wherein the current limiting device is connected between the electrical power source and the electrical network.

In an embodiment, the electrical power system further comprises a power converter connected between the electrical power source and the current limiting device.

In an embodiment, the electrical power system further comprises a first electrical bus and a second electrical bus. The current limiting device and the circuit breaker are connected between the first electrical bus and the second electrical bus.

According to a fourth aspect, there is an aircraft comprising the electrical power system of the third aspect. The aircraft may be a purely electric aircraft, a hybrid-electric aircraft (e.g., a gas turbine hybrid electric aircraft or a fuel cell electric aircraft) or an aircraft comprising one or more propulsive gas turbine engines (e.g., a 'more electric' aircraft).

Controllers described herein may take any suitable and desired form. Examples include, but are not limited to: Analogue Controllers, Digital Signal Processors (DSPs), Field Programmable Gate Arrays (FPGAs), Application Specific Integrated Circuits (ASICs) and the like. A controller may be a standalone controller or form part of a wider control system, for example an Electronic Engine Controller (EEC) or a Full Authority Digital Engine Controller (FADEC).

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

FIG. 1A is a schematic illustration of a portion of an electrical power system;

FIG. **1B** is a schematic illustration of an aircraft electrical power system;

FIG. **2** shows a prior art current limiting diode;

FIG. **3** shows a current limiting device in accordance with the present disclosure;

FIG. **4A** shows an embodiment of the current limiting device of FIG. 3, comprising two JFETs and a source resistor;

FIG. **4B** shows an embodiment comprising N = 3 JFETs;

FIG. **4C** shows an embodiment including additional resistance in the circuit branches that connect the source terminal of the $N^{th}$ JFET to the gate terminals of the N JFETs;

FIG. **4D** shows another embodiment comprising N = 3 JFETs;

FIG. **5A** shows an embodiment having a secondary current path;

FIG. **5B** shows another embodiment having a secondary current path;

FIG. **5C** shows another embodiment having a secondary current path;

FIG. **5D** shows an embodiment in which the secondary current path includes resistor;

FIG. **6A** shows another embodiment having a secondary current path;

FIG. **6B** shows another embodiment having a secondary current path;

FIG. **7A** illustrates an embodiment in which the secondary current path comprises two semiconductor switches;

FIG. **7B** shows an embodiment in which N = 3 and the secondary current path comprises two semiconductor switches;

FIG. **7C** shows an embodiment in which a TVS connects the source and gate of the n = 1 JFET;

FIG. **8A** shows an embodiment in which N = 3 and the secondary current path comprises three semiconductor switches;

FIG. **8B** shows another embodiment in which N = 3 and the secondary current path comprises three semiconductor switches;

FIG. **9A** shows an embodiment in which N = 3 and in which voltages across the JFETs are balanced by avalanche diodes;

FIG. **9B** shows the embodiment of FIG. 9A with a parallel secondary current path; and

FIG. **10** is a plan view of an aircraft.

## DETAILED DESCRIPTION

### *FIGS. 1A-1B*

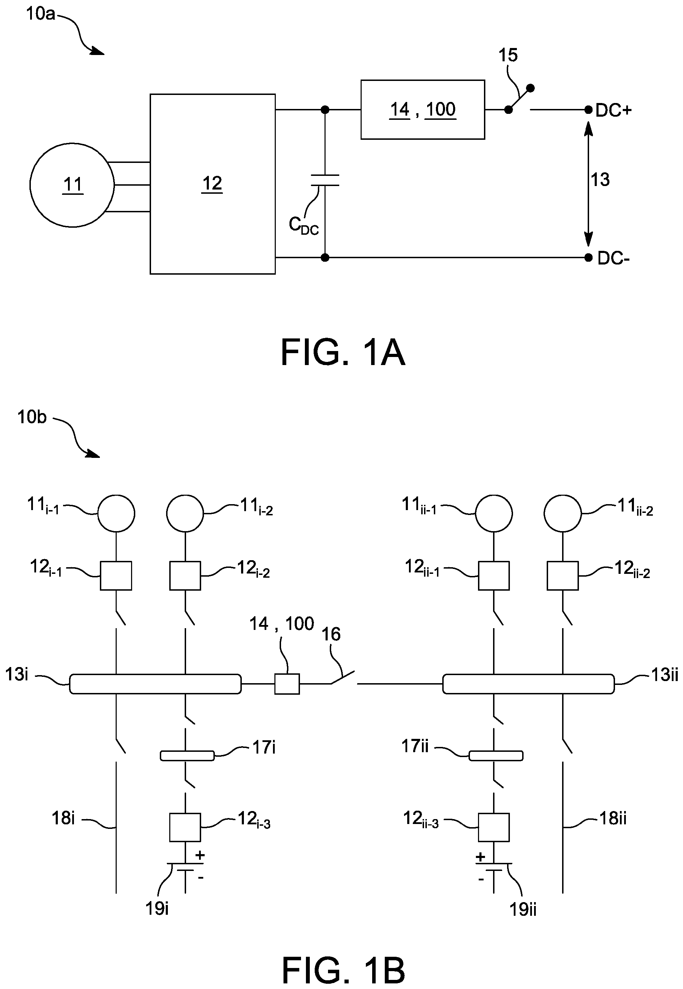

FIG. 1A illustrates an electrical power system 10a that comprises an electrical power source 11, a power converter 12 and an electrical network 13. In this example the electrical power source 11 is an AC power source in the form of a three-phase electrical generator, the electrical network 13 is a DC electrical network, and the power converter 12 is an AC:DC power converter connected, at an AC input side, to the generator 11 and, at DC output terminals DC+, DC-, to the DC electrical network 13. A DC link capacitor, $C_{DC}$, is connected between the output terminals DC+, DC-. In other examples, the power source 11 may instead be a DC power source (e.g., a battery) and the power converter 12 may be omitted or be a DC:DC power converter.

In the event of a fault (e.g., a short-circuit fault) in the DC electrical network 13, the voltage across the output terminals DC+, DC- of the power converter 12 may collapse, as may the impedance seen by the converter across the output terminals DC+, DC-. The collapse of the voltage may allow the DC link capacitor, $C_{DC}$, to discharge, causing a short but very high pulse of current that could damage components in the network 13. Furthermore, if the generator 11 and power converter 12 continue to supply power, the low impedance of the faulted network results in the generator 11 supplying the network 13 with a high and sustained current that could damage components.

To protect against these fault currents, the electrical power system 10a further includes a current limiting device 14, 100 and, optionally, a circuit breaker 15 connected in series between the power converter 12 and the electrical network 13. The current limiting device 14, 100 acts to limit the magnitude of the current supplied to the network 13 without completely blocking it, whilst the circuit breaker 15 provides the option of isolating the DC network 13 from the power source 11. The circuit breaker 15 may be a mechanical breaker (e.g., a DC contactor) or, alternatively, a semiconductor-based breaker, e.g., an SSCB. Mechanical breakers may be preferred in some applications as they provide galvanic isolation, whereas in other applications an SSCB may be preferred due to its superior speed.

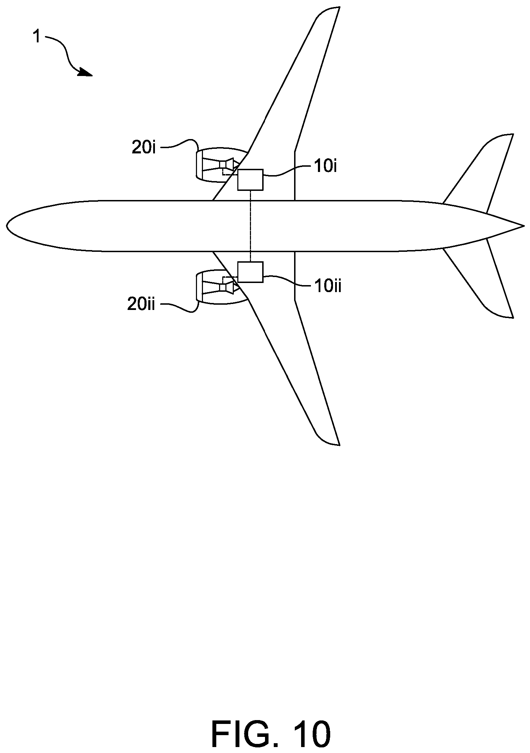

FIG. 1B illustrates another electrical power system 10b, in this case forming part of a power and propulsion system of an aircraft (e.g., the aircraft 1 of FIG. 10). The electrical power system 10b includes a first DC power bus 13i that exchanges electrical power with two electrical machines $11_{i-1}$, $11_{i-2}$ via respective bi-directional AC:DC power converters $12_{i-1}$, $12_{i-2}$, and a second power bus 13ii that exchanges electrical power with two electrical machines $11_{ii-1}$, $11_{ii-2}$ via respective bi-directional AC:DC power converters $12_{ii-1}$, $12_{ii-2}$. In this non-limiting example, the electrical machines $11_{i-1}$, $11_{i-2}$ are mechanically coupled with LP and HP shafts of a first gas turbine engine, whilst the electrical machines $11_{ii-1}$, $11_{ii-2}$ are mechanically coupled with LP and HP shafts of a second gas turbine engine. Each power bus 13i, 13ii supplies power to a respective aircraft electrical network 18i, 18ii and to a respective engine electrical network 17i, 17ii. In the illustrated example, each engine electrical network 17i, 17ii can also exchange DC power with a respective energy storage system 19i, 19ii via a respective DC:DC power converter $12_{i-3}$, $12_{ii-3}$.

The first and second power busses 13i, 13ii may, normally, be electrically isolated from each other. In some instances, however, it may be desirable to connect the first and second power busses 13i, 13ii together so that power can be exchanged therebetween. For example, power exchange between the busses 13i, 13ii may facilitate a cross-engine electric start or restart procedure. To this end, a bus tie 16 can be closed to connect the power busses 13i, 13ii. If a fault occurs on one side of the electrical power system (e.g., the power bus 13ii or an electrical network 17ii, 18ii connected thereto) while the bus tie 16 is closed, a large fault current could be supplied to and damage components on the faulted side of the system 10b. To protect against this, a current limiting device 14, 100 may be connected with the bus tie 16 to limit current flow.

The current limiting diode 14 described above with reference to FIG. 2 may be used to implement the current limiting devices 14, 100 of the systems 10a, 10b of FIGS. 1A-1B. However, the systems may then suffer associated drawbacks.

*FIG. 3*

FIG. 3 illustrates a current limiting device 100 in accordance with the present disclosure. The current limiting device 100 may be used in electrical power systems including, but not limited to, the power systems 10a, 10b described above.

The current limiting device 100 comprises an integer number, N, of JFETs $101_1$, $101_2$, ..., $101_{N-1}$, $101_N$ (hereafter $101_{1-N}$), which may be n-channel JFETs. The number, N, of JFETs is at least two (i.e., $N \geq 2$), and each of the N JFETs may be identified by a unique index, n, where n = 1, ..., N. Each JFET has a source terminal (S), a drain terminal (D) and a gate terminal (G), as will be understood by those skilled in the art. The drain terminal of the first JFET $101_1$ (i.e., n = 1) forms or is connected to a first node, $N_1$, which may be an input terminal of the current limiting device 100. Meanwhile, the source terminal of the $N^{th}$ (i.e., n = N) JFET $101_N$ forms or is connected to a second node, $N_2$, which may be an output terminal of the current limiting device 100.

For the JFETs for which n < N (i.e., JFETs for which n = 1, ..., N-1), the source terminal of the $n^{th}$ JFET is connected with the drain terminal of the $(n+1)^{th}$ JFET. Thus, the source terminal of the first (n = 1) JFET $101_1$ is connected with the drain terminal of the second (n = 2) JFET $101_2$, the source terminal of the second (n = 2) JFET $101_2$ is connected with the drain terminal of the third (n = 3) JFET $101_3$ and so forth, until finally the source terminal of the $(N-1)^{th}$ JFET $101_{N-1}$ is connected to the drain terminal of the $N^{th}$ JFET $101_N$.

For the $N^{th}$ JFET $101_N$, as well as forming or being connected to the second (e.g., output) node $N_2$, the source terminal is connected to the gate terminal of each of the N JFETs $101_{1-N}$. Optionally, a source resistor 102 may be provided, connected between the source terminal of the $N^{th}$ JFET $101_N$ and the gate terminals of the N JFETs $101_{1-N}$.

As noted above, the number of JFETs, N, is at least two (i.e., $N \geq 2$). Thus, referring to FIG. 3, in the minimal case where N = 2, the dashed box $101_X$ is empty and the source terminal of the first JFET 1011 is connected to the drain terminal of the $N^{th}$ (n = N = 2) JFET $101_N$. Where N = 3, the dashed box $101_X$ contains one JFET $101_2$, the drain terminal of which is connected to the source terminal of the first JFET $101_1$, and the source terminal of which is connected to the drain terminal of the $N^{th}$ (n = N = 3) JFET $101_N$. Generally speaking, the number of JFETs, N, may be increased with the voltage rating requirement of the current limiting device 100. For example, N > 3 JFETs may be used for higher voltage applications.

Without loss of generality, consider the $R^{th}$ JFET, where R is an integer satisfying $1 \leq R \leq N$. The gate voltage of the $R^{th}$ JFET will be provided by the sum of the voltage drops across the (N - R) JFETs for which N > R, plus the voltage drop across the source resistor 102, if present. Thus, if the magnitude of the current flowing from the first node $N_1$ to the second node $N_2$ increases, causing the voltage drop across each component to increase, the $N^{th}$ JFET $101_N$ experiences the smallest increase in gate voltage magnitude, whilst the first (n = 1) JFET $101_1$ experiences the largest increase in gate voltage magnitude. The electrical resistance of a JFET is controlled by its gate voltage, so all of the JFETs $101_{1-N}$ experience an increase in their electrical resistance, but the biggest increase in electrical resistance may be experienced by the first JFET $101_1$. Thus, when the current increases, the first JFET $101_1$ may play the largest role in limiting the current, while the other JFETs, particularly the $N^{th}$ JFET $101_N$, increase the magnitude of the gate voltage of, and therefore electrical resistance of, the first JFET $101_1$.

In one example, each JFET has an identical voltage rating (e.g., equal to V) and the current limiting device has a voltage rating of N*V. In other examples, the first JFET $101_1$ may have a higher rating (e.g., may be composed of a higher number of parallel-connected JFETs) than at least some of the other JFETs (e.g., JFET $101_N$) as the first JFET $101_1$ may perform more current limiting action than the other JFETs. The $N^{th}$ JFET, which plays a smaller role in limiting the current, may have a lower rating and thus a smaller footprint (e.g., may be composed of a lower number of parallel-connected JFETs). In one example, the JFET for which n = 1 has a higher voltage rating than all JFETs for which n > 1. In another example in which there are at least three series-connected JFETs, $N = N_H + N_L$, $N_H$ being an integer and $N_H \geq 2$ and $N_L$ being an integer and $N_L \geq 1$, and a voltage rating of each the $N_H$ JFETs for which $n \leq N_H$ is greater than a voltage rating of each of the $N_L$ JFETs for which $n > N_H$. This approach may provide a high voltage rating while retaining relatively low losses during normal operation. In a further example, for all n > 1, a voltage rating of the $n^{th}$ JFET is greater than a voltage rating of the $(n-1)^{th}$ JFET.

It may be appreciated that since an increase in voltage drop across a given JFET increases the magnitude of the gate voltage of, and thus the resistance of, each JFET with a lower value of n, a small increase in current flow may cause a significant increase (e.g., a non-linear and/or exponential increase) in the resistance of the first JFET $101_1$. An advantage may be that the source resistor 102 may be selected to have a relatively small resistance value or may be omitted entirely. This may result in reduced steady-state losses compared to, e.g., the arrangement 14 of FIG. 2, as the only resistance presented by the current limiting device 100 during normal operation is the low device resistance of the JFETs $101_{1-N}$ and, if present, the relatively small resistance of the source resistor 102.

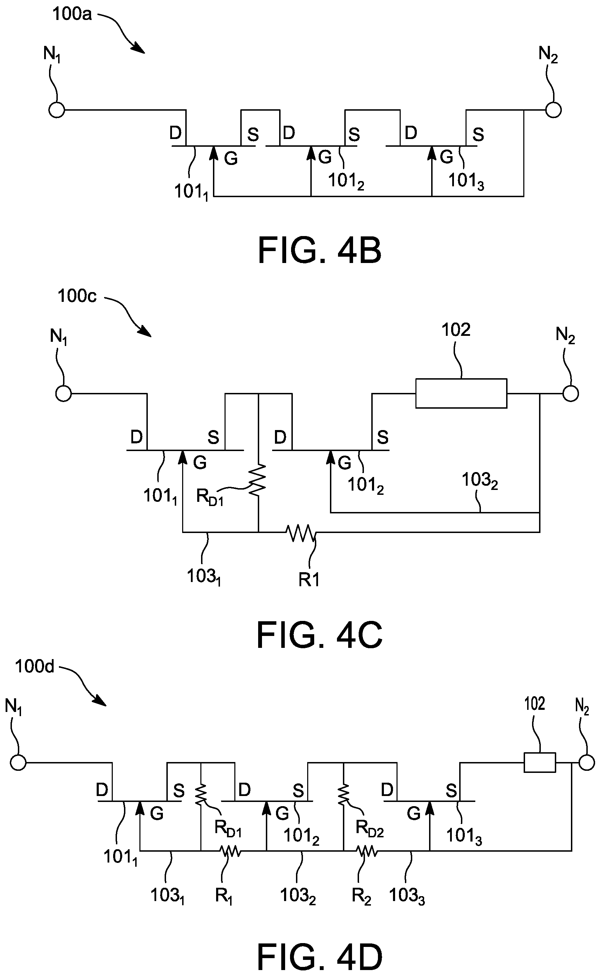

Non-limiting examples of the current limiting device 100 are described below with reference to FIGS. 4-9.

### FIG. 4A

FIG. 4A illustrates an embodiment 100a of the current limiting device 100 in which the number of JFETs is two (i.e., N = 2) and in which the optional source resistor 102 is present. The source resistor 102 may be selected to have a relatively small resistance value (e.g., compared to that in FIG.2 for an equivalent electrical power system). Thus, during normal steady-state operation (e.g., where the magnitude of the current flow between $N_1$ and $N_2$ is as expected), the losses incurred due to the current limiting device 100a are relatively low. If the current flowing between $N_1$ and $N_2$ increases (e.g., due to a fault), the voltage drop across the source resistor 102 will increase ($\Delta V = \Delta I * R_s$, where $R_s$ is the resistance of the source resistor 102). The increase in voltage drop across the source resistor 102 increases the magnitudes of the gate voltages of both the JFETs $101_1$, $101_2$. The first JFET $101_1$ is, however, subject to a further increase in gate voltage magnitude, caused by the increase in resistance and thus voltage drop across the second JFET $101_2$ when its gate voltage increased. Thus, the first JFET $101_1$ may experience a larger increase in resistance and play the primary role in resisting the increase in current flow through the device 100a.

### FIG. 4B

FIG. 4B illustrates an embodiment 100b in which N = 3 and the optional source resistor 102 is omitted. During normal use, the steady-state resistive losses associated with the current limiting device 100c are particularly low due to the omission of the source resistor 102 and are caused only by the device resistances of the JFETs $101_1$, $101_2$, $101_3$, which are designed to be low at normal operating currents. If the current flowing between $N_1$ and $N_2$ increases due to,

e.g., a fault in an electrical power system in which the device 100c is connected, the voltage drop across the third JFET $101_3$ increases, causing the gate voltage of the first and second JFETs $101_{1-2}$ to increase in magnitude. This first JFET $101_1$ is subject to a further increase in gate voltage magnitude, caused by the increased voltage drop across the second JFET $101_2$ that results from the increase in the electrical resistance of the second JFET $101_2$ following the increase in its gate voltage magnitude. Thus, the first JFET $101_1$ may experience a larger increase in resistance and plays the primary role in resisting the increase in current flow through the device 100b.

In this example, the third JFET $101_3$ takes on a role similar to that of the resistor 102 of the device 100a of FIG. 4A but may be associated with lower steady state losses. As the third JFET $101_3$ plays a smaller role in limiting the current, it may have a lower voltage rating than the other JFETs $101_1$, $101_2$ and a smaller footprint. In an example, the voltage rating of the third JFET $101_3$ may be about 40 V, whilst the voltage rating of the first and second JFETs $101_1$, $101_2$ may be greater than 40 V.

### FIG. 4C

FIG. 4C illustrates another embodiment 100c in which N = 2 and the optional source resistor 102 is present. In this embodiment, the connection between the source terminal of the second JFET $101_2$ and the gate terminals of the two JFETs $101_1$, $101_2$ is shown to form two circuit branches: a first branch $103_1$ that connects the source terminal of the second JFET $101_2$ to the gate terminal of the first JFET $101_1$, and a second branch $103_2$ that connects the source terminal of the second JFET $101_2$ to the gate terminal of the second JFET $101_2$. The first circuit branch $103_1$ includes an additional resistor, $R_1$, that is not present in the second branch $103_2$. Thus, the first circuit branch $103_1$ has a greater electrical resistance than the second branch $103_2$.

During normal operation, the additional resistor $R_1$ does not make any significant difference and the device 100c operates substantially as described above with reference to FIG. 4A. However, if the current flowing between $N_1$ and $N_2$ increases, the gate voltage of the first JFET $101_1$ is subject to a further increase caused by the increased voltage drop across the resistor $R_1$ in the first circuit branch $103_1$. This may make the current limiting device 100c more sensitive. Additionally or alternatively, it may allow the selection of a source resistor 102 with an even lower resistance value, or for the source resistor 102 be omitted entirely, resulting in lower steady state losses.

The current limiting device 100c of FIG. 4C is further shown to include a connection between the source terminal of the first JFET $101_1$ and the gate terminal of the first JFET $101_1$ that includes a resistor $R_{D1}$. The resistor $R_{D1}$ may be selected to have a relatively high resistance compared to the resistor $R_1$ (e.g., $R_{D1}$

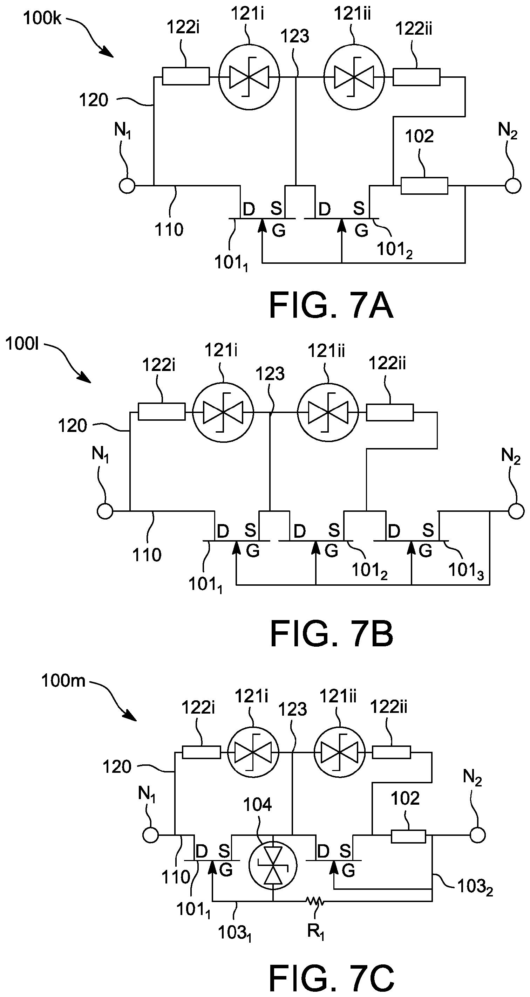

may have a resistance of ~k$\Omega$). Consequently, while an increase in current flow from $N_1$ to $N_2$ will still cause an increase in the gate voltage magnitude of the first JFET $101_1$, the gate of the first JFET $101_1$ may be protected against over-voltage due to the voltage dividing action of the resistor $R_{D1}$. This may make the arrangement of FIG. 4C particularly suitable for, for example, high-voltage applications. Briefly referring to FIG. 7C, the resistor $R_{D1}$ may be replaced by a Transient Voltage Suppressor (TVS) 104 to perform a similar function.

### FIG. 4D

FIG. 4D illustrates another embodiment 100d in which N = 3. Here, the connection between the source terminal of the third JFET $101_3$ and the gate terminals of the three JFETs $101_1$, $101_2$, $101_3$ is shown to form three circuit branches: a first branch $103_1$ that connects the source terminal of the third JFET $101_3$ to the gate terminal of the first JFET $101_1$, a second branch $103_2$ that connects the source terminal of the third JFET $101_3$ to the gate terminal of the second JFET $101_2$, and a third branch $103_3$ that connects the source terminal of the third JFET $101_3$ to the gate terminal of the third JFET $101_3$. The first and second branches $103_1$, $103_2$ both include a resistor $R_2$ that is not present in the third branch $103_3$, whilst the first circuit branch $103_1$ includes an additional resistor, $R_1$, that is not present in the second or third branches $103_2$, $103_3$. Thus, the first circuit branch $103_1$ has a greater electrical resistance than the second branch $103_2$, which has a greater electrical resistance than the third circuit branch $103_3$.

During normal operation, the additional resistors $R_1$, $R_2$ do not make any significant difference and the device 100d operates substantially as described above with reference to FIG. 4B, albeit with the additional increase in the gate voltages provided by the source resistor 102. However, if the current flowing between $N_1$ and $N_2$ increases, the gate voltage of the second JFET $101_2$ is subject to a further increase caused by the increased voltage drop across the resistor $R_2$ in the second circuit branch $103_2$. The gate voltage of the first JFET $101_1$ is subject to two further increased caused by the increased voltage drop across the resistor $R_2$ and the increased voltage drop across the resistor $R_1$. This may make the current limiting device 100d more sensitive. Additionally or alternatively, it may allow the selection of a source resistor 102 with an even lower resistance value, or for the source resistor 102 be omitted entirely, resulting in lower steady state losses.

The current limiting device 100d of FIG. 4D is further shown to include a connection between the source terminal of the first JFET $101_1$ and the gate terminal of the first JFET $101_1$ that includes a resistor $R_{D1}$. Further, there is a connection between the source terminal of the second JFET $101_2$ and the gate terminal of the second JFET $101_2$ that includes a resistor $R_{D2}$. Similar to the embodiment of FIG. 4C, these resistors

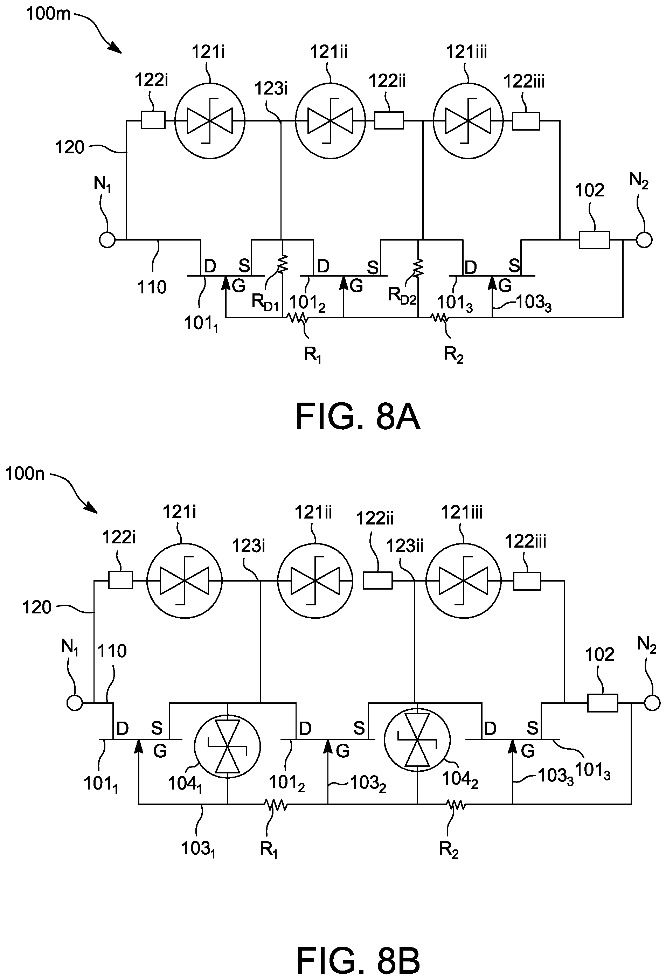

$R_{D1}$, $R_{D2}$, which may have a higher resistance than $R_1$ and $R_2$, create potential divider circuits that protect the gate terminals of the JFETs $101_1$, $101_2$ from over-voltage, which may be particularly useful for high-voltage applications. Briefly referring to FIG. 8B, the resistors $R_{D1}$, $R_{D2}$ may be replaced by TVSs $104_1$, $104_2$ to perform a similar function.

### FIGS. 5A-5D

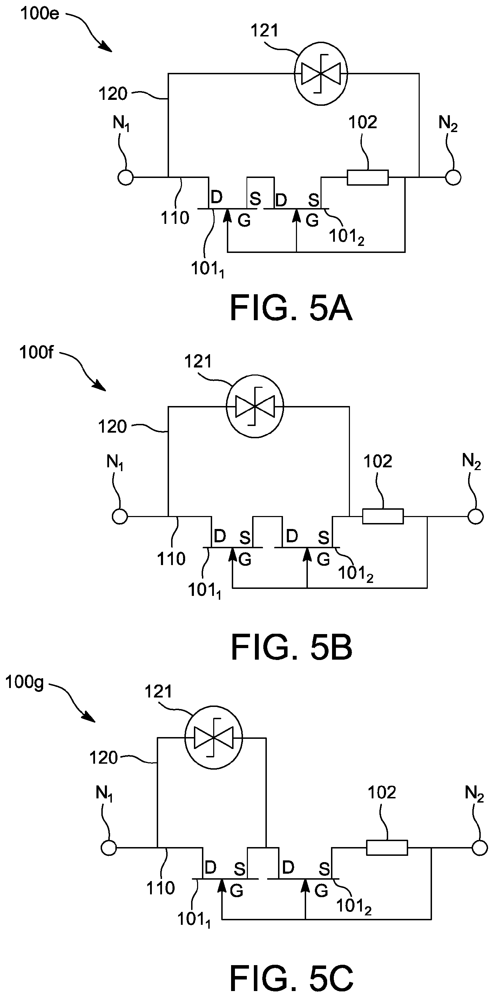

FIGS. 5A-5D illustrate embodiments 100e-h in which the current limiting device comprises, between the nodes $N_1$, $N_2$, a primary current path 110 and a secondary current path 120 connected in parallel with the primary current path 110. The primary current path 110 comprises the N JFETs $101_{1\text{-}N}$. The secondary current path 120 comprises a semiconductor switch 121, which in one group of examples is a Transient Voltage Suppressor (TVS). A TVS 121 is a class of components that blocks all current flow until the voltage across it exceeds a breakdown voltage, after which it conducts until the voltage across it drops below the breakdown voltage. Examples of a TVS include, for example, a TVS diode and a Metal Oxide Varistor (MOV).

Referring to FIG. 5A, the primary current path 110 comprises the arrangement of FIG. 4A, i.e., N = 2 and the optional source resistor 102 is present. During normal use (i.e., where the current flow between $N_1$ and $N_2$ is within the expected range for the electrical power system in which the device 100 is connected), the current limiting device 100e operates in substantially same way as that described above with reference to FIG. 4A, i.e., current flows through the primary current path 110 with relatively low resistive losses. The voltage drop across the N JFETs $101_{1\text{-}N}$ and the source resistor 102 is below the breakdown voltage of the TVS 121, so the secondary current path 120 is blocked (e.g., inactive) and no current flows through the secondary path 120.

If the current flow between the first and second nodes $N_1$, $N_2$ increases, the primary current path 110 behaves as described above with reference to FIG. 4A, i.e., the voltage drop across the source resistor 102 increases, increasing the magnitude of the gate voltages of the first and second JFETs $101_1$, $101_2$. The first JFET $101_1$ is subject to a further increase in gate voltage magnitude due to the increase in resistance of the second JFET $101_2$ because of its increase in gate voltage magnitude. Thus, the resistance of the first JFET $101_1$ increases even further. Overall, the voltage drop across the two JFETs $101_1$, $101_2$ increases. Eventually, the voltage drop will be sufficient to activate the TVS 121, and a further increase in current will be shunted through the secondary current path 120, protecting the JFETS $101_{1\text{-}2}$.

This approach, utilizing a secondary current path 120 with a semiconductor switch 121 (e.g., TVS), may reduce the required level of current limiting capability of the JFETs $101_1$, $101_2$, particularly the first JFET

$101_1$. In other words, the JFETs $101_1$, $101_2$ may not need to be rated to handle the full fault current, as above a certain current level the excess current will be shunted through the secondary current path 120. In some cases, due in part to the limitations of the underlying semiconductor technologies (e.g., Silicon Carbide, SiC), increasing the rating of a JFET (e.g., JFET $101_1$) may require that multiple (e.g., many) JFETs are connected in parallel. This would increase the size and mass of the current limiting device 100. Utilizing the secondary current path 120 may reduce or avoid the need to connect JFETs in parallel.

Turning to FIG. 5B, this illustrates an embodiment 100f in which a second terminal of the secondary current path 120 is connected such that the source resistor 102 is in series with both the N JFETs $101_{1-N}$ and the secondary current path 120. Thus, the source resistor 102 plays two roles: it provides a gate voltage to the JFETs $101_1$, $101_2$ and it dissipates power passing through the secondary current path 120 when the TVS 121 is activated. Of particular note, the voltage drop across the source resistor 102 continues to increase and provide a gate biasing voltage of increasing magnitude after the TVS 121 is activated, providing further protection to the JFETs $101_{1-2}$.

FIG. 5C illustrates an embodiment 100g in which the secondary current path 120 is connect in parallel with only the first JFET $101_1$ of the primary current path 110. Thus, the activation of the TVS 121 is dependent on the voltage drop across the first JFET $101_1$. Further, the second JFET $101_2$ and the source resistor 102 continue to provide a biasing voltage after the TVS 121 and, therefore, the secondary current path 120 is activated.

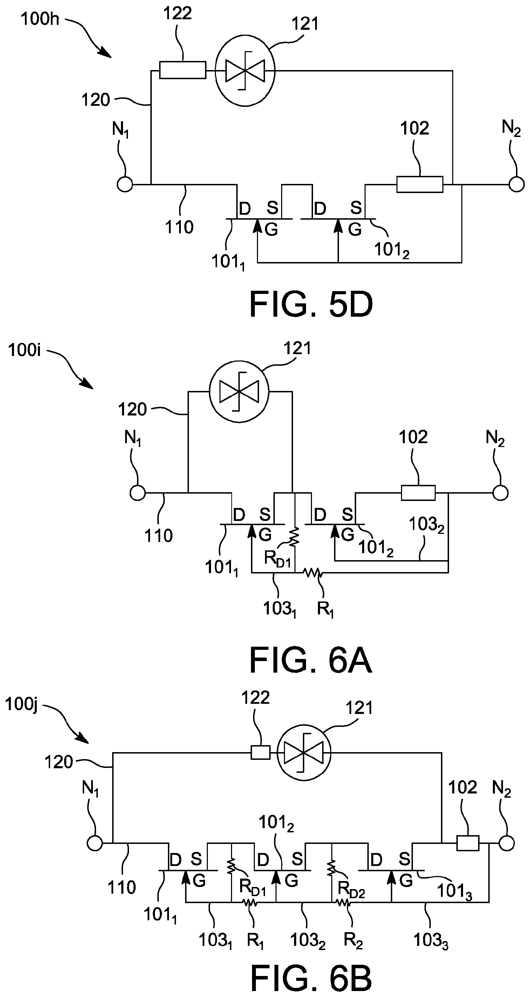

FIG. 5D illustrates an embodiment 100h in which the secondary current path 120 further includes a damping resistor 122 connected in series with the TVS 121. Thus, in the event current is shunted in the secondary current path 120 following, e.g., a fault, power may be dissipated by the damping resistor 122. Since the damping resistor 122 does not carry current during normal (e.g., non-faulted) operation, there is no associated steady-state losses. It should be appreciated that the approach of FIG. 5D may be combined with those of FIGS. 5B-5C, i.e., the damping resistor 122 may also be provided in these embodiments.

### FIGS. 6A-6B

Each of FIGS. 5A-5D illustrates a current limiting device 100 in which the primary current path 110 comprises the arrangement of JFETs shown in FIG. 4A. This is not intended to be limiting, and the primary current path 110 may instead include another arrangement of JFETs $101_{1-N}$ consistent with FIG. 3. To illustrate, FIGS. 6A-6B illustrate current limiting devices 100i, 100j in which the primary current paths comprise alternative arrangements of JFETs.

Referring to FIG. 6A, this illustrates a current limiting device 100i in which the primary current path 110 comprises the arrangement of FIG. 4C. Here, during normal operation, the behaviour of the current limiting device 100i is as described with reference to FIG. 4C. The secondary current path 120 is connected in parallel across the first JFET $101_1$. If the current flowing through the primary current path 110 increase to the point that the voltage drop across the first JFET $101_1$ exceeds, e.g., the breakdown voltage of the TVS 121, excess current will be shunted through the secondary path 120. In this example, since the secondary current path passes through the second JFET $101_2$ and the source resistor 102, the second JFET $101_2$ and the resistor continue to provide a current-dependent gate biasing voltage even after the secondary path 120 is activated. This may help protect the JFETs.

FIG. 6B illustrates a current limiting device 100j in which the primary current path 110 comprises the arrangement of FIG. 4D. Here, during normal operation, the behaviour of the current limiting device 100j is as described with reference to FIG. 4D. The secondary current path 120 is connected in parallel across the first, second and third JFETs $101_{1-3}$. If the current flowing through the primary current path 110 increases to the point that the voltage drop across the three JFETs $101_{1-3}$ exceeds, e.g., the breakdown voltage of the TVS 121, excess current will be shunted through the secondary path 120. In this example, the secondary current path 120 further comprises a damping resistor 122 and is connected in series with the source resistor 102. Thus, the resistors 102, 122 dissipate power flowing through the secondary path 120, and the source resistor 102 continues to provide a gate voltage of increasing magnitude to the JFETs $101_{1-3}$ after the secondary path 120 is activated.

### FIGS. 7A-7C

In the examples of FIGS. 5A-5D and 6A-6B, the secondary current path 120 comprises a single TVS 121. FIGS. 7A-7C illustrate further examples in which the secondary current path 120 comprises two TVSs 121i, 121ii. In each case, each TVS 121i, 121ii is connected in series with a respective damping resistor 122i, 122ii. Optionally, either one or both of these resistors 122i, 122ii may be omitted. Utilizing more than one semiconductor switch may provide individual over voltage protection to the JFETs in the primary current path 110.

FIG. 7A illustrates an embodiment 100k in which the primary current path 110 is as described with reference to FIG. 4A, with the secondary current path 120 connected across the primary path 110 as shown in FIG. 5B. The secondary current path 120 comprises a first TVS 121i and series damping resistor 122i connected in parallel across the first JFET $101_1$, and a second TVS 121ii and series damping resistor 122ii connected in parallel across the first and second JFETs $101_1$, $101_2$.

The first and second TVSs 121i, 121ii are connected in series at an intermediate node 123.

During normal operation, the behaviour of the current limiting device 100i is as described with reference to FIG. 4A. If the current flowing between $N_1$ and $N_2$ increases (e.g., due to a fault in a downstream electrical network), the voltage drop across the source resistor 102 and JFETs $101_1$, $101_2$ will increase, as described above. Eventually, the combined voltage drop across the first and second JFETs $101_1$, $101_2$ will reach the breakdown voltage of the second TVS 121ii, causing excess current to be shunted from the primary path 110 to the branch of the secondary path comprising the second TVS 121ii, via the intermediate node 123. This may protect the second JFET $101_2$ from the increasing current, which may reduce the rating requirement of the second JFET $101_2$. If the current increases further, the voltage drop across the first JFET $101_1$ will reach the breakdown voltage of the first TVS 121i. This will cause at least some of the further excess current to be shunted from the primary path 110 to the branch of the secondary path 120 comprising the first TVS 121i, protecting the first JFET $101_1$. Current passing through the secondary path 120 is dissipated by the damping resistors 122i, 122ii, if present.

FIG. 7B illustrates an embodiment 100I in which the primary current path 110 is as described with reference to FIG. 4B, with the secondary current path 120 connected across the first and second JFETs $101_1$, $101_2$ of the three JFETs $101_{1-3}$. The secondary current path 120 comprises a first TVS 121i and series damping resistor 122i connected in parallel across the first JFET $101_1$, and a second TVS 121ii and series damping resistor 122ii connected in parallel across the first and second JFETs $101_1$, $101_2$. The first and second TVSs 121i, 121ii are connected in series at an intermediate node 123.

During normal operation, the behaviour of the current limiting device 100I is as described with reference to FIG. 4B. If the current flowing between $N_1$ and $N_2$ increases (e.g., due to a fault in a downstream electrical network), the voltage drop across each of the JFETs $101_{1-3}$ increases. Eventually, the combined voltage drop across the first and second JFETs $101_1$, $101_2$ will reach the breakdown voltage of the second TVS 121ii, causing excess current to be shunted from the primary path 110 to the branch of the secondary path comprising the second TVS 121ii, via the intermediate node 123. This may protect the second and third JFETs $101_2$, $101_3$ from the increasing current, which may reduce their rating requirements. If the current increases further, the voltage drop across the first JFET $101_1$ will reach the breakdown voltage of the first TVS 121i. This will cause at least some of the further excess current to be shunted from the primary path 110 to the branch of the secondary path comprising the first TVS 121i, protecting the first JFET $101_1$. Current passing through the secondary path 120 is dissipated by the damping resistors 122i, 122ii, if present.

FIG. 7C illustrates an embodiment 100m in which the primary current path 110 is as described with reference to FIG. 4C, albeit with the overvoltage protection resistor $R_{D1}$ replaced by a TVS 104. The secondary current path 120 is connected across the primary path 110 as shown in FIG. 5B. The secondary current path 120 comprises a first TVS 121i and series damping resistor 122i connected in parallel across the first JFET $101_1$, and a second TVS 121ii and series damping resistor 122ii connected in parallel across the first and second JFETs $101_1$, $101_2$. The first and second TVSs 121i, 121ii are connected in series at an intermediate node 123.

During normal operation, the behaviour of the current limiting device 100m is as described with reference to FIG. 4C. If the current flowing between $N_1$ and $N_2$ increases (e.g., due to a fault in a downstream electrical network), the voltage drop across the source resistor 102 and JFETs $101_1$, $101_2$ will increase, as described above. Eventually, the combined voltage drop across the first and second JFETs $101_1$, $101_2$ will reach the breakdown voltage of the second TVS 121ii, causing excess current to be shunted from the primary path 110 to the branch of the secondary path comprising the second TVS 121ii, via the intermediate node 123. This may protect the second JFET $101_2$ from the increasing current. If the current increases further, the voltage drop across the first JFET $101_1$ will reach the breakdown voltage of the first TVS 121i. This will cause at least some of the further excess current to be shunted from the primary path 110 to the branch of the secondary path comprising the first TVS 121i, protecting the first JFET $101_1$. Current passing through the secondary path 120 is dissipated by the damping resistors 122i, 122ii, if present. As explained above with reference to FIG. 4B, the TVS 104 may protect the gate of the first JFET $101_1$ against over-voltage, which may make the arrangement of FIG. 7C particularly suitable for high-voltage applications.

### FIGS. 8A-8B

FIGS. 8A-8B illustrate embodiments of the current limiting device 100 in which the primary current path 110 comprises N = 3 JFETs $101_{1-3}$ and the secondary current path 120 comprises first, second and third TVSs 121i, 121ii, 121iii. In the examples, each TVS is connected in series with a respective damping resistor 122i, 122ii, 122iii but one or more of these may be omitted.

FIG. 8A illustrates an embodiment 100m in which the primary current path 110 is as described with reference to FIG. 4D, with the secondary current path 120 connected across the primary path 110 as shown in FIG. 5B and 6B. The secondary current path 120 comprises a first TVS 121i and series damping resistor 122i connected in parallel across the first JFET $101_1$, a second TVS 121ii and series damping resistor 122ii connected in parallel across the first and second JFETs $101_1$, $101_2$, and a third TVS 121iii and series damping resistor 122iii connected in parallel across the first, second and third JFETs $101_1$, $101_2$, $101_3$. The first and second TVSs 121i, 121ii are connected in series at a first intermediate node, 123i. The second and third TVSs 121ii, 121iii are connected in series at a second intermediate node 123ii.

During normal operation, the behaviour of the current limiting device 100m is as described with reference to FIG. 4D. If the current flowing between $N_1$ and $N_2$ increases (e.g., due to a fault in a downstream electrical network), the voltage drop across the source resistor 102 and JFETs $101_1$, $101_2$, $101_2$ will increase, as described above. Eventually, the combined voltage drop across the first, second and third JFETs $101_1$, $101_2$, $101_3$ will reach the breakdown voltage of the third TVS 121iii, causing excess current to be shunted from the primary path 110 to the branch of the secondary path comprising the third TVS 121iii, via the second intermediate node 123ii. This may protect the third JFET $101_3$ from the increasing current. If the current increases further, the combined voltage drop across the first and second JFETs $101_1$, $101_2$ will reach the breakdown voltage of the second TVS 121ii. This will cause at least some of the further excess current to be shunted from the primary path 110 to the branch of the secondary path comprising the second TVS 121ii, via the first intermediate node 123i. If the current increases further still, the voltage drop across the first JFET $101_1$ will reach the breakdown voltage of the first TVS 121i. This will cause at least some of the further excess current to be shunted from the primary path 110 to the branch of the secondary path comprising the first TVS 121i. Current passing through the secondary path 120 is dissipated by the damping resistors 122i, 122ii, 122iii, if present.

FIG. 8B illustrates an embodiment 100n that differs from the embodiment 100m of FIG. 8A only in that the overvoltage protecting resistors $R_{D1}$, $R_{D2}$ are replaced by TVSs $104_1$, $104_2$. The TVSs $104_1$, $104_2$ may normally present as open circuits, but breakdown in the event of a gate overvoltage event to protect the gate terminals of the JFETs from the overvoltage.

### FIGS. 9A-9B

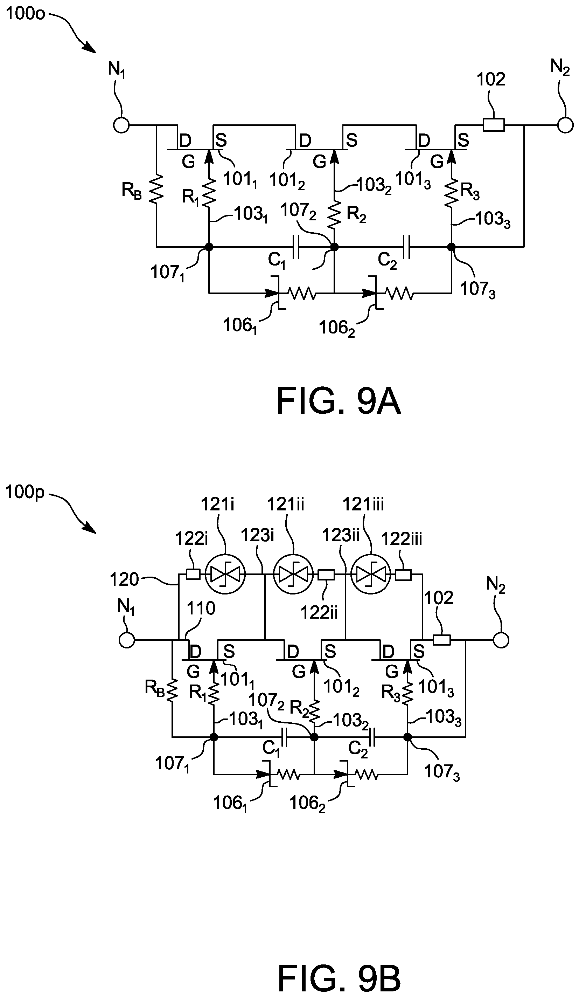

FIG. 9A illustrates a further embodiment 100o of the current limiting device 100. It is similar to that of FIGS. 4A and 4C in that N = 3 and the source terminal of the third JFET $101_3$ is connected to the gate terminal of each of the first, second and third JFET $101_{1-3}$. However, in this embodiment:

- The source terminal of the $N^{th}$ JFET $101_3$ is connected to the gate terminals of the N JFETs $101_1$, $101_2$, $101_3$ via a Resistor-Capacitor (RC) network, in this example comprising resistors $R_1$, $R_2$, $R_3$ and capacitors $C_1$, $C_2$.

- There is a resistor $R_B$, which may have a very high resistance (e.g., ~100 kΩ), connecting the drain terminal of the n = 1 JFET $101_1$ to the RC network.

- The gate terminals of the N JFETs are further connected via avalanche diodes $106_1$, $106_2$, which may be connected in series with associated resistors. Specifically, the gate terminal of the $n^{th}$ JFET is connected to the gate terminal of the $(n+1)^{th}$ JFET via an avalanche diode. As can be seen, the circuit paths comprising the avalanche diodes $106_1$, $106_2$ are further connected to the RC network, meeting at nodes $107_{1-3}$.

Here, through suitable selection of the component values, the RC network provides control of the response speed (e.g., turn-on and turn-off times) of the JFETs $101_{1-3}$ when a fault occurs. Meanwhile, the avalanche diodes $106_1$, $106_2$ help balance the voltages across the JFETs $101_{1-3}$, with the optional series resistors limiting the voltages, $V_{ds}$, across the JFETs $101_{1-3}$ to desired values. The additional resistor $R_B$ that connects the drain terminal of the n = 1 JFET $101_1$ to the RC network ensures that the first JFET $101_1$ forms part of the voltage balancing circuit.

FIG. 9B illustrates an embodiment 100p that differs from the embodiment 100o of FIG. 9A in that there is a secondary current path 120 connected in parallel across the primary current path. The secondary current path is shown to comprise three TVSs 121i, 121ii, 121ii as in the embodiments 100m, 100n of FIGS. 9A-9B, though this is not intended to be limiting and the secondary current path 120 could comprise one or two TVSs as in FIGS. 5A-5C, 6A-6B and 7A-7C.

Various modifications and alternatives to the current limiting device 100 will occur to those skilled in the art. For example:

- While embodiments with N = 2 and N = 3 JFETs are described, any number of JFETs 101 greater than or equal to two may be used. For example, in some embodiments, N = 4.

- Where a secondary current path 120 is provided, the number and arrangement of semiconductor switches 121 is not limited to the examples described herein. Generally, the number of semiconductor switches 121 is at least one and is less than or equal to N.

- While the semiconductor switches 121 have been described as TVSs, this is not necessarily the case. For example, each semiconductor switch 121 may instead be MOSFET or JFET. A controller (not shown) may be provided to monitor a voltage in the primary path 110 (e.g., a voltage across the resistor 102 or one or more of the JFETs $101_{1-N}$) and to, through control of the MOSFET or JFET gate voltage, switch ON the MOSFET or JFET to conduct when the voltage passes a threshold.

*FIG. 10*

FIG. 10 is a plan view of an aircraft 1. The aircraft 1 comprises two gas turbine engines 20i, 20ii and two electrical power systems 10i, 10i, which may be of the type described herein. The first electrical power system 10i may comprise a rotary electrical machine that is coupled to a shaft of a first of the gas turbine engines 20i. Likewise, the second electrical power system 10i may comprise a rotary electrical machine that is coupled to a shaft of a second of the gas turbine engines 20i. As illustrated by the dashed line, in this example, the two electrical power systems 10i, 10i may be electrically connected or connectable together, for example by a bus tie 16 as described with reference to FIG. 1B. Other aircraft feature a different number of gas turbine engines, including zero, one, and three or more. The current limiting devices 100 described herein may be used in any type of electrical power system and/or any type of aircraft.

It will be understood that the invention is not limited to the embodiments above-described and various modifications and improvements can be made without departing from the concepts herein. The invention has been described with reference to aerospace applications but could be used in other transport and non-transport applications. Except where mutually exclusive, any of the features may be employed separately or in combination with any other features and the disclosure extends to and includes all combinations and subcombinations of one or more features described herein.

Various examples have been described, each of which feature various combinations of features. It will be appreciated by those skilled in the art that, except where clearly mutually exclusive, any of the features may be employed separately or in combination with any other features.

**Claims**

1. A current limiting device (100) comprising:

    an integer number, N, of JFETs ($101_{1-N}$), each JFET of the N JFETs having a source terminal (S), a drain terminal (D) and a gate terminal (G), wherein:

    $$N \geq 2;$$

    each of the N JFETs has an index n = (1, ..., N);
    for n = (1, ..., N-1), the source terminal of the $n^{th}$ JFET is connected to the drain terminal of the $(n+1)^{th}$ JFET; and
    the source terminal of the $N^{th}$ JFET ($101_N$) is connected to the gate terminal of each of the N JFETs.

2. The current limiting device of claim 1, wherein each JFET has a voltage rating equal to V and the current limiting device has a voltage rating of N*V.

3. The current limiting device of claim 1, wherein the JFET for which n = 1 has a higher voltage rating than all JFETs for which n > 1.

4. The current limiting device of claim 1, wherein $N = N_H + N_L$, and:

    $N_H$ is an integer and $N_H \geq 2$;
    $N_L$ is an integer and $N_L \geq 1$; and
    a voltage rating of each the $N_H$ JFETs for which $n \leq N_H$ is greater than a voltage rating of each of the $N_L$ JFETs for which $n > N_H$.

5. The current limiting device of any one of the preceding claims, further comprising a resistor connected between the source terminal of the $N^{th}$ JFET and the gate terminal of each of the N JFETs.

6. The current limiting device of any one of the preceding claims, wherein:

    the source terminal of the $N^{th}$ JFET is connected to the gate terminal of the $n^{th}$ JFET via an $n^{th}$ circuit branch;
    for n = (1, ..., N-1), an electrical resistance of the $n^{th}$ circuit branch is greater than an electrical resistance of the $(n+1)^{th}$ branch.

7. The current limiting device of any one of the preceding claims, wherein, for n = (1, ..., N-1), the source terminal of the $n^{th}$ JFET is connected with the gate terminal of the $n^{th}$ JFET via a resistor or Transient Voltage Suppressor (TVS).

8. The current limiting device of any one of the preceding claims, wherein the source terminal of the Nth JFET is connected to the gate terminal of each of the N JFETs via an RC network.

9. The current limiting device of any one of the preceding claims, wherein N = 2 or N = 3.

10. The current limiting device of any one of the preceding claims, comprising:

    a primary current path connected between a first node and a second node, the N JFETs connected in the primary current path; and
    a secondary current path connected between the first node and the second node in parallel with the primary current path, the secondary current path comprising a semiconductor switch configured to allow current flow through the secondary current path when a voltage in the primary current path passes a threshold.

11. The current limiting device of claim 10, wherein the semiconductor switch comprises a Transient Voltage Suppressor, TVS.

12. The current limiting device of any one of claims 10 to 11, comprising a resistor connected in series with the semiconductor switch and between the source terminal of the $N^{th}$ JFET and the gate terminal of each of the N JFETs.

13. The current limiting device of any one of claims 10 to 12, wherein the secondary current path is connected between the drain terminal of the JFET for which n = 1 and the source terminal of one of the N JFETs.

14. The current limiting device of any one of claims 10 to 13, wherein the secondary current path is connected between the drain terminal of the JFET for which n = 1 and the source terminal of the JFET for which n = 1.

15. The current limiting device of any one of claims 10 to 14, wherein the secondary current path comprises a first semiconductor switch and a second semiconductor switch connected in series, a node between the first and second semiconductor switches being connected to the source terminal of the JFET for which n = 1.

10a

FIG. 1A

10b

FIG. 1B

14

FIG. 2
(PRIOR ART)

FIG. 3

FIG. 4A

FIG. 4B

FIG. 4C

FIG. 4D

100e

121

120

N₁

102

N₂

110

D S D S

G G

101₁ 101₂

## FIG. 5A

100f

121

120

N₁

102

N₂

110

D S D S

G G

101₁ 101₂

## FIG. 5B

100g

121

120

N₁

102

N₂

110

D S D S

G G

101₁ 101₂

## FIG. 5C

FIG. 5D

FIG. 6A

FIG. 6B

FIG. 7A

FIG. 7B

FIG. 7C

FIG. 8A

FIG. 8B

FIG. 9A

FIG. 9B

FIG. 10

Europäisches
Patentamt

European
Patent Office

Office européen
des brevets

# EUROPEAN SEARCH REPORT

**Application Number**

EP 25 18 3894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/233669 A1 (CHIN CHIA LEONG [SG] ET AL) 11 August 2016 (2016-08-11) | 1,2,5,9 | INV. H02H9/02 |
| Y | * paragraph [0054]; figure 3 * | 7,8, 10-13 | |
| A | | 3,4,6, 14,15 | |
| | ----- | | |
| X | US 4 744 369 A (KROLL MARK W [US]) 17 May 1988 (1988-05-17) | 1,2,5,9 | |
| Y | * See section "Background of the | 7,8 | |
| A | invention"; figure 3 * | 3,4,6, 10-15 | |
| | ----- | | |
| Y | US 8 912 840 B2 (AGGELER DANIEL [CH]; BIELA JÜRGEN [CH] ET AL.) 16 December 2014 (2014-12-16) | 7,8 | |
| A | * figure 2 * | 1-6,9-15 | |
| | ----- | | |
| A | EP 4 080 540 A1 (LITTELFUSE INC [US]) 26 October 2022 (2022-10-26) * the whole document * | 1-15 | |
| | ----- | | **TECHNICAL FIELDS SEARCHED (IPC)** |
| X | US 5 761 019 A (KROLL MARK W [US]) 2 June 1998 (1998-06-02) * the whole document * | 1,2,9 | H02H |
| | ----- | | |
| A | US 7 646 576 B2 (BOURNS INC [US]) 12 January 2010 (2010-01-12) * the whole document * | 1-15 | |
| | ----- | | |
| Y | US 2009/207542 A1 (CARCOUET SEBASTIEN [FR] ET AL) 20 August 2009 (2009-08-20) | 10-13 | |
| A | * paragraphs [0036] - [0038], [0055]; figure 2 * | 14,15 | |
| | ----- | | |

The present search report has been drawn up for all claims

| Place of search | Date of completion of the search | Examiner |
|---|---|---|
| Munich | 30 September 2025 | Trifonov, Antoniy |

EPO FORM 1503 03.82 (P4C01)

## ANNEX TO THE EUROPEAN SEARCH REPORT
## ON EUROPEAN PATENT APPLICATION NO.

EP 25 18 3894

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2025

| Patent document cited in search report | | | Publication date | Patent family member(s) | | Publication date |
|---|---|---|---|---|---|---|
| US 2016233669 | A1 | | 11-08-2016 | EP 3056961 A1 | | 17-08-2016 |
| | | | | US 2016233669 A1 | | 11-08-2016 |
| US 4744369 | A | | 17-05-1988 | NONE | | |
| US 8912840 | B2 | | 16-12-2014 | CH 702971 A2 | | 14-10-2011 |
| | | | | CN 102948076 A | | 27-02-2013 |
| | | | | EP 2556590 A1 | | 13-02-2013 |
| | | | | JP 5728076 B2 | | 03-06-2015 |
| | | | | JP 2013526129 A | | 20-06-2013 |
| | | | | RU 2012146465 A | | 20-05-2014 |
| | | | | US 2013057332 A1 | | 07-03-2013 |
| | | | | WO 2011123962 A1 | | 13-10-2011 |
| EP 4080540 | A1 | | 26-10-2022 | CN 115241838 A | | 25-10-2022 |
| | | | | EP 4080540 A1 | | 26-10-2022 |
| | | | | JP 2022167806 A | | 04-11-2022 |
| | | | | KR 20220145764 A | | 31-10-2022 |
| | | | | TW 202249376 A | | 16-12-2022 |
| US 5761019 | A | | 02-06-1998 | AU 697971 B2 | | 22-10-1998 |
| | | | | EP 0820652 A1 | | 28-01-1998 |
| | | | | US 5761019 A | | 02-06-1998 |
| | | | | WO 9725761 A1 | | 17-07-1997 |
| US 7646576 | B2 | | 12-01-2010 | US 2006098365 A1 | | 11-05-2006 |
| | | | | WO 2006053314 A2 | | 18-05-2006 |
| US 2009207542 | A1 | | 20-08-2009 | CN 101189778 A | | 28-05-2008 |
| | | | | EP 1886393 A2 | | 13-02-2008 |
| | | | | FR 2886778 A1 | | 08-12-2006 |
| | | | | US 2009207542 A1 | | 20-08-2009 |
| | | | | WO 2006129005 A2 | | 07-12-2006 |

EPO FORM P0459

For more details about this annex : see Official Journal of the European Patent Office, No. 12/82